# EUROPEAN PATENT SPECIFICATION

(11) **EP 2 472 939 B1**
(45) Date of publication and mention of the grant of the patent: **14.03.2018**
(21) Application number: 10813259.8
(22) Date of filing: 30.04.2010
(51) Int. Cl.: H04W 24/00, H04W 88/00, H04B 17/00, G06F 1/18, G06F 1/26

(54) **SYSTEM AND METHOD FOR MONITORING PARALLEL BASE STATION POWER SUPPLY**
SYSTEM UND VERFAHREN ZUR ÜBERWACHUNG EINER PARALLELEN STROMVERSORGUNG VON BASISSTATIONEN
SYSTÈME ET PROCÉDÉ DE SURVEILLANCE DE L'ALIMENTATION ÉLECTRIQUE PARALLÈLE D'UNE STATION DE BASE

(30) Priority: 01.09.2009 CN 200910189927
(43) Date of publication of application: 04.07.2012
(73) Proprietor: ZTE Corporation, Shenzhen City, Guangdong Province 518057 (CN)
(72) Inventor: XIONG, Yong, Shenzhen City, Guangdong Province 518057 (CN)
(74) Representative: Murgitroyd & Company
(86) International application number: PCT/CN2010/072373
(87) International publication number: WO 2011/026337

(56) References cited:
- CA-A1- 2 713 428
- CN-A- 101 656 549
- CN-Y- 201 063 808
- JP-A- 2004 282 921
- US-A1- 2003 223 572
- US-A1- 2004 076 438
- US-A1- 2005 068 716
- LI, CHONGJIAN COMMUNICATION POWER SUPPLY TECHNOLOGY, STANDARD AND MEASUREMENT(REVISED EDITION) January 2007, BEIJING: BEIJING UNIVERSITY OF POSTS AND TELECOMMUNICATIONS PRESS, pages 5 - 10, XP008160895

## Description

### Technical Field

The present invention relates to the filed of communication, and in particular, to a system and method for monitoring parallel base station power supplies.

### Background Art

The power supply applied to a communication base station is generally divided, depending on different system capacities and application scenes, into types including multi-rack large-scale system power supply, uni-rack base station power supply, embedded powers supply and wall-hanged power supply. The multi-rack large-scale system power supply generally has a capacity above 1000A and is composed of a plurality of alternating-current distribution panels, rectifier racks and direct-current distribution panels in parallel, so it is very large in volume and generally requires at least three cabinets (a standards cabinet has two norms of 600mm and 800mm) for containing the whole power supply system. Therefore, the multi-rack large-scale system power supply is mainly applied in central power supply circumstances such as a central machinery room. The embedded power supply and wall-hanged power supply generally have a capacity below 200A and are relatively small in volume, and thus are usually applied in small base station corollary equipment. The capacity of the uni-rack base station power supply is generally between 100A and 800A, and only occupies one standard cabinet, so it is applied most widely in various scenes due to its moderate capacity and economic space occupancy rate.

With the rapid development of 3G and various types of value-added services of telecommunication, the requirements of various telecommunication devices provided by the telecommunication operators for the capacity, performance and economical efficiency of the base station power supply become higher, and many operators hope that the base station power supply can occupy space as small as possible while providing sufficient capacity. Therefore, many technicians designed a parallel base station power supply capable of implementing flexible configuration as needed by utilizing the advantages of moderate capacity and small volume of the uni-rack base station power supply. For example, when the desired capacity of the power supply is within 800A, it only needs to configure one uni-rack base station power supply of 800A; when the traffic rises above 800A and below 1600A, it is quite easy to install another uni-rack base station power supply in parallel so as to achieve the purpose of saving initial investment costs and saving space.

However, currently most uni-racks adopt non-intelligent rectifier technology, and there is still a technology barrier before achieving parallel control of base station power supplies. In practice, a crucial technical difficulty is the line layout problem. When a plurality of base station power supplies disposed in parallel are monitored through a monitoring unit, a large number of rectifier signal lines all converge at the monitoring unit, thus making it difficult to perform line layout. A rectifier of each rack at least needs six signal lines for connecting with the monitoring unit, and when a standard rack is configured with sixteen rectifiers, 96 signal lines are required, and if another rack is installed in parallel, 192 signal lines are required. If the operator wants to install five cabinets in parallel, then 480 signal lines are connected to the monitoring unit, and this will bring an unimaginable difficulty to line layout, observing and controlling capability and maintenance and detection of the connector and the monitoring unit.

An existing system for monitoring parallel base station power supplies comprises a primary monitoring unit and a plurality of secondary monitoring units, all racks are directly connected in parallel and each rack is configured with a secondary monitoring unit, and each secondary monitoring unit is only responsible for monitoring all rectifiers of the present rack; the primary monitoring unit and the secondary monitoring units are connected with each other via a bus, for example controller area network (CAN) and RS485, and the primary monitoring unit obtains the information of the rectifiers in each rack from each secondary monitoring unit so as to monitor the whole parallel base station power supplies. However, this kind of monitoring system needs to add a secondary monitoring unit at each rack and thus the cost is very high; moreover, since each secondary monitoring unit has to be configured with a bus interface, there are also problems of primary-secondary switching and software upgrading, so the stability is relatively low.

Another existing system for monitoring parallel base station power supplies adopts a distributed monitoring scheme, and each rack is configured with an additional MCU (Micro Controller Unit) and a HUB controlled by software, wherein, the HUB is used as a simplified monitoring unit for detecting and controlling all rectifiers of the present rack, and is connected with a monitoring unit through a bus, for example CAN and RS485, and plays a conveying function. The working principle of this kind of monitoring system is: after the HUB detects the rectifier information of the rack, it communicates the information to the monitoring unit through a serial interface, and meanwhile receives the command from the monitoring unit for controlling each rectifier. This kind of monitoring method still has certain defects, for example, the HUB needs the support of MCU and software, not only the costs are high, but also the issues such as the upgrading of software, compatibility of communication protocols and check of communication protocols will cause certain influence on the stability of the monitoring system.

The document US 20040076438 A1 discloses an optical communication boards having optical modules thereon, and supplying system power to the mounted optical communication boards; a remote control line supplying a power supplying control signal to the optical communication boards receiving the system power by being mounted on the racks, and selectively supplying the supplied system on the optical modules according to the power supplying control signal supplied through the remote control line; and a remote controller preventing the system power from being supplied to the optical modules when the optical communication boards are mounted on the racks while the system power is sponding optical modules through the remote line in modules when the system power is stable at predetermined level by being applied to the optical modules from being damaged by the system power when the optical communication boards are mounted on the optical communication system.

### Summary of the Invention

The technical problem to be solved in the present invention is to provide a system and method for monitoring parallel base station power supplies, which are low in costs and can improve the stability of the system.

The technical scheme adopted by the present invention for solving this technical problem is as follows:
Provided is a system for monitoring parallel base station power supplies, comprising a monitoring unit and at least one rack, wherein each rack includes a HUB and at least one rectifier; the monitoring unit is used to transmit a control signal to the HUB through a control signal line group; the HUB is used to receive the control signal and gate a corresponding rack and a rectifier according to the control signal.

The HUB is further used to control the gated rectifier, or collect a rectifier signal from the gated rectifier and then send the rectifier signal to the monitoring unit through a rectifier signal line group.

The monitoring unit comprises a rack gating controlling module and a rectifier gating controlling module, the HUB is constituted by hardware circuits and comprises a channel switching module, the channel switching module interacts with at least one rectifier in a present rack where it is located through a signal line, the control signal comprises a rack gating signal and a rectifier gating signal, the control signal line group comprises a rack gating signal line and a rectifier gating signal line; the rack gating controlling module is used to output the rack gating signal and send the rack gating signal to the channel switching module through the rack gating signal line; the rectifier gating controlling module is used to output the rectifier gating signal and send the rectifier gating signal to the channel switching module through the rectifier gating signal line; the channel switching module is used to receive the rack gating signal and rectifier gating signal, select a corresponding rectifier according to the rack gating signal and rectifier gating signal and then collect a rectifier signal from the corresponding rectifier and send the rectifier signal to the monitoring unit through the rectifier signal line group.

The HUB further comprises a rack gating module, which is used to receive the rack gating signal, and judge the rack gating signal, and if the rack is gated, output a rack gating success signal to the channel switching module; correspondingly, the channel switching module is used to select a corresponding rectifier according to the rack gating success signal and the rectifier gating signal.

The rack gating module further comprises a comparator, which is preconfigured with a board gating address corresponding to the present rack; the comparator is used to compare the rack gating signal with the board gating address, and output the rack gating success signal to the channel switching module when the rack gating signal is consistent with the board gating address.

The HUB further comprises a counter, and the rectifier gating signal is a cadence signal; the counter is used to receive the cadence signal, generate a rectifier address signal according to the cadence signal and then output the rectifier address signal to the channel switching module; correspondingly, the channel switching module is further used to select a corresponding rectifier according to the rack gating signal and the rectifier address signal.

The HUB further comprises a rack gating module, which is used to receive the rack gating signal and judge the rack gating signal, if the rack is not gated, output a rack gating failure signal to the counter; correspondingly, the counter is further automatically cleared according to the rack gating failure signal.

The monitoring unit further comprises a switching on/off controlling module, and the HUB further comprises an addressing latch, which interacts with at least one rectifier in the present rack, the control signal further comprises a switching on/off control signal, and the control signal line group further comprises a switching on/off control signal line; the switching on/off controlling module is used to output the switching on/off control signal, and send the switching on/off control signal to the addressing latch through the switching on/off control signal line; the addressing latch is used to receive the switching on/off control signal, the rack gating signal and the rectifier gating signal, and select a corresponding rectifier according to the rack gating signal and the rectifier gating signal and then send the switching on/off control signal to the corresponding rectifier.

The monitoring unit further comprises a voltage regulation controlling module, the HUB further comprises a driver, which interacts with at least one rectifier of the present rack, the control signal further comprises a voltage regulation signal, and the control signal line group further comprises a voltage regulation signal line; the voltage regulation controlling module is used to output the voltage regulation signal, and send the voltage regulation signal to the driver through the voltage regulation signal line; the driver is used to receive the voltage regulation signal and send the voltage regulation signal to at least one rectifier in the present rack.

The monitoring unit further comprises a power supply controlling module, the HUB further comprises a power supply module, the control signal further comprises a power supply signal and/or a ground signal, and the control signal line group further comprises a power supply signal line and/or a ground signal line; the power supply controlling module is used to provide the power supply signal for the power supply module through the power supply signal line, and/or provide the ground signal for the power supply module through the ground signal line.

A method for monitoring parallel base station power supplies, wherein, a monitoring unit monitors rectifiers in at least one rack, and the method comprises the following steps: the monitoring unit transmitting a control signal to a HUB in the rack through a control signal line group; the HUB receiving the control signal and gating corresponding rack and rectifier according to the control signal.

The method further comprises: the HUB controlling the gated rectifier, or collecting a rectifier signal from the gated rectifier and then sending the rectifier signal to the monitoring unit through a rectifier signal line group.

The control signal comprises a rack gating signal and a rectifier gating signal, the control signal line group comprises a rack gating signal line and a rectifier gating signal line, and correspondingly, the method further comprises:
the monitoring unit sending the rack gating signal to the HUB through the rack gating signal line, and sending the rectifier gating signal to the HUB through the rectifier gating signal line;
after selecting a corresponding rectifier according to the received rack gating signal and rectifier gating signal, the HUB collecting a rectifier signal from the corresponding rectifier and sending the rectifier signal to the monitoring unit through the rectifier signal line group.

The step of the HUB selecting a corresponding rectifier according to the received rack gating signal and rectifier gating signal is specifically:
the HUB comparing the received rack gating signal with a board gating address preset in the HUB, and selecting the corresponding rectifier according to the rectifier gating signal when the rack gating signal is consistent with the board gating address.

The rectifier gating signal is a cadence signal, and the step of the HUB selecting a corresponding rectifier according to the received rack gating signal and rectifier gating signal is specifically:
the HUB generating a rectifier address signal according to the received cadence signal, and selecting the corresponding rectifier according to the rack gating signal and the rectifier address signal.

The control signal further comprise a switching on/off control signal, and the control signal line group further comprises a switching on/off control signal line, and correspondingly, the method further comprises:
the monitoring unit sending the switching on/off control signal to the HUB through the switching on/off control signal line;
after selecting a corresponding rectifier according to the received rack gating signal and rectifier gating signal, the HUB sending the switching on/off control signal to the corresponding rectifier.

The control signal further comprises a voltage regulation signal, the control signal line group further comprises a voltage regulation signal line, and correspondingly, the method further comprise:
the monitoring unit sending the voltage regulation signal to the HUB through the voltage regulation signal line;
the HUB sending the voltage regulation signal to at least one rectifier of the rack where it is located.

The control signal further comprises a power supply signal and/or a ground signal, the control signal line group further comprises a power supply signal line and/or a ground signal line, and correspondingly, the method further comprises:
the monitoring unit providing the power supply signal for the HUB through the power supply signal line, and/or providing the ground signal for the HUB through the ground signal line.

The beneficial effect of the present invention is that in the present invention, the HUB and the monitoring unit are enabled to interact by the control signal and rectifier signal through a bus network composed of a control signal line group and a rectifier signal line group, and the all rectifier signal lines on the present rack converge at the HUB so as to achieve signal interaction between the HUB and each rectifier. The monitoring system has less lines for transmitting bus signals, so no complicated line connection is formed between multiple cabinets.

After the monitoring unit initiates a monitoring instruction to the HUB, the HUB that is designed purely with hardware directly interacts with the rectifier through the signal line without the support of MCU control or software, therefore, the cost is low and it does not need to consider the issues including software upgrading and compatibility of communication protocols, thus significantly improving the stability of the monitoring system.

In a preferred embodiment, the HUB selects a rack by means of a comparator, and selects a rectifier by means of a counter, so the number of lines is further reduced. The counter may also automatically be cleared according to the rack gating failure signal, which facilitates correct counting of the next time.

In order to decrease the power supply cost of the HUB, the monitoring unit may also supply power to the HUB remotely through a bus.

### Brief Description of Drawings

FIG. 1 is a network architecture diagram of the first specific embodiment of the system for monitoring parallel base station power supplies according to the present invention;

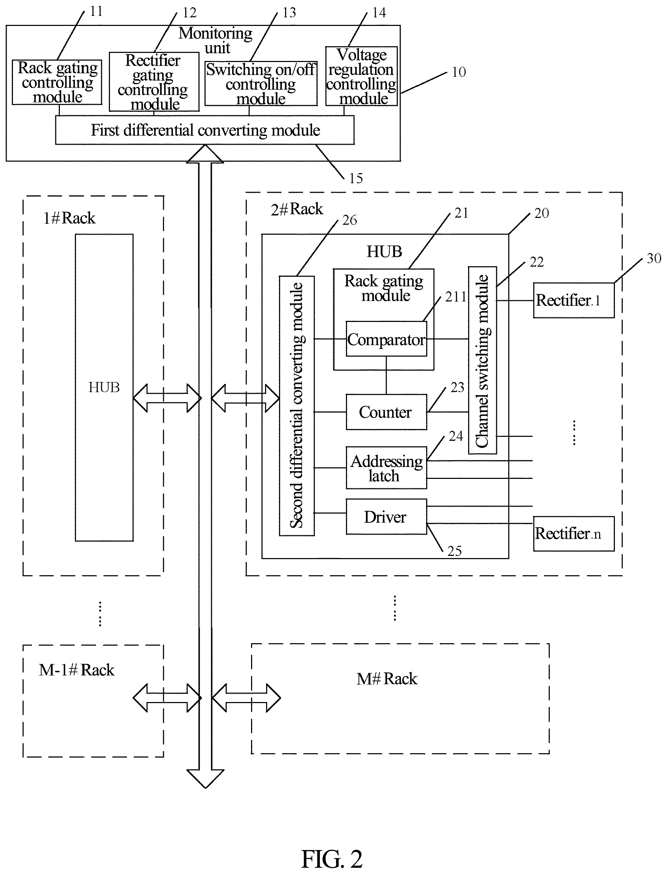

FIG. 2 is a network architecture diagram of the second specific embodiment of the system for monitoring parallel base station power supplies according to the present invention;
FIG. 3 illustrates a specific embodiment of the monitoring unit in the system for monitoring parallel base station power supplies according to the present invention;
FIG. 4 illustrates a specific embodiment of the HUB in the system for monitoring parallel base station power supplies according to the present invention;
FIG. 5 illustrates the first specific embodiment of the method for monitoring parallel base station power supplies according to the present invention;
FIG. 6 illustrates the second specific embodiment of the method for monitoring parallel base station power supplies according to the present invention.

### Preferred Embodiments of the Invention

The technical scheme of the present invention will be further described in detail below with reference to the drawings and specific examples.

In the system and method for monitoring parallel base station power supplies according to the present invention, each rack is configured with a HUB purely designed with hardware, and a monitoring unit interacts with multiple rectifiers in each rack with control signal and rectifier signal actually by means of bus network. The monitoring unit sends control signal such as voltage regulation signal (PWM, Pulse Width Modulation) and switching on/off control signal (SW) to the HUB through a control signal line group, and then the HUB sends the rectifier signal such as in-position signal EXT, alarm signal ALM and current signal CUR from the rectifier to the monitoring unit through a rectifier signal line group, so different control signals or rectifier signals are transmitted by way of bus through different lines. After the monitoring unit sends out a monitoring instruction through the bus, the HUB directly interacts with the rectifier through signals without the support of MCU control or software, therefore, the cost is low and it does not need to consider the issues including software upgrading and compatibility of communication protocols, thus significantly improving the stability of the monitoring system.

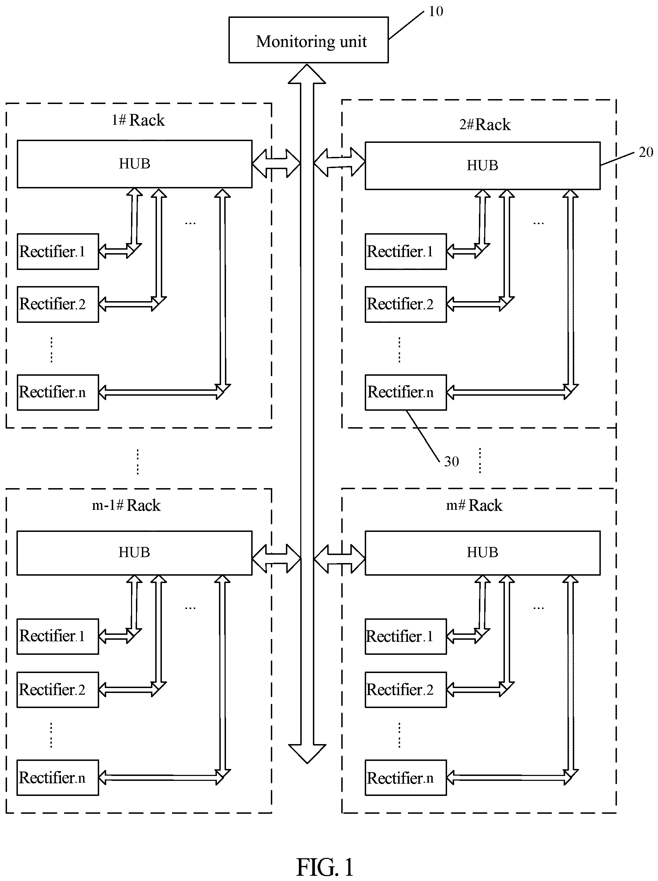

As shown in FIG. 1, the system for monitoring parallel base station power supplies in the embodiment comprises a monitoring unit 10 and at least one rack. These racks are disposed in parallel, each rack comprises a HUB 20 and at least one rectifier 30, and the HUB 20 is constituted purely by hardware circuits. The monitoring unit 10 is used to send a control signal to the HUB 20 through control signals line group, and these control signals comprise a rack gating signal required for gating each rack, a rectifier gating signal for gating the rectifier 30 in each rack, voltage regulation signal PWM, switching on/off control signal SW, etc.; correspondingly, the control signal line group comprises a rack gating signal line, a rectifier gating signal line, a voltage regulation signal line or a switching on/off control signal line. The HUB 20 is used to receive the control signals, gate the corresponding rack and rectifier 30 through the received control signals, and control the gated rectifier 30, or collect rectifier signals from the gated rectifier 30 and then send the rectifier signals to the monitoring unit 10 through the rectifier signal line group. These rectifier signals comprise an in-position signal EXT, an alarm signal ALM, a current signal CUR and so on that need to be reported to the monitoring unit 10 by each rectifier 30; correspondingly, the rectifier signal line group comprises a in-position signal line, an alarm signal line or a current signal line, etc. The present invention realizes information interaction between the HUB 20 and the monitoring unit 10, so the number of lines is small, and there will be no complicated line connection between multiple cabinets; moreover, the HUB 20 purely designed with hardware is adopted, all rectifier signal lines in the present rack converge at the HUB 20, and the HUB collects rectifier signals from the rectifier 30 through the signal lines, or sends the control signals and the like to the rectifier 30. Compared with the mode in the prior art where the HUB 20 initiatively monitors each rectifier signal and reports it to the monitoring unit, the stability of the system is significantly improved since the software control for the HUB 20 is reduced.

As shown in FIG, 2, the monitoring unit 10 in this embodiment comprises a rack gating controlling module 11 and a rectifier gating controlling module 12, the HUB 20 in each rack further comprises a channel switching module 22, which interacts with at least one rectifier 30 in the present rack through the signal lines, and the control signal line group comprises a rack gating signal line and a rectifier gating signal line. The rack gating controlling module 11 is used to output a rack gating signal and send the rack gating signal to the channel switching module 22 in reach HUB 20 through the rack gating signal line to facilitate selection of a corresponding rack; the rectifier gating controlling module 12 is used to output a rectifier gating signal and send the rectifier gating signal to the channel switching module 22 in each HUB 20 through the rectifier gating signal line to facilitate selection of a corresponding rectifier 30.

The channel switching module 22 in each HUB 20 is used to receive the rack gating signal and rectifier gating signal, select a corresponding rectifier 30 according to the rack gating signal and the rectifier gating signal and then collect a rectifier signal from the corresponding rectifier 30 and send the rectifier signal to the monitoring unit 10 through the rectifier signal line group. In this embodiment, in order to achieve remote transmission of control signals and rectifier signals between the monitoring unit 10 and each rack and avoid signal interference, the signals may be divided into differential signal pairs, so the monitoring unit 10 further comprises a first differential level converting module 15; correspondingly, the HUB 20 further comprises a second differential level converting module 26, and the first differential level converting module 15 and the second differential level converting module 26 are used to perform level conversion for the control signals and rectifier signals to allow them to be transmitted through the control signal line group or the rectifier signal line group.

In this embodiment, the channel switching module 22 in the HUB 20 may directly select the corresponding rack and rectifier 30 according to the rack gating signal and the rectifier gating signal, and the HUB 20 may also firstly process the rack gating signal and the rectifier gating signal and then enable the channel switching module 22 to select the corresponding rack and rectifier 30 according to the processed signals. When the monitoring unit 10 selects the rack, in an embodiment, the HUB 20 further comprises a rack gating module 21, which is used to receive the rack gating signal and judge the rack gating signal, and if the obtained rack gating signal is consistent with the present rack, indicating that the present rack is gated, output a rack gating success signal, otherwise, indicating that the present rack is not gated, output a rack gating failure signal; the rack gating module 21 output the rack gating success signal to the channel switching module 22, and the channel switching module 22 selects the corresponding rectifier 30 according to the rack gating success signal combined with the received rectifier gating signal, and collects rectifier signals from the corresponding rectifier 30. In this embodiment, after selecting a unique rectifier 30 in a certain rack through the HUB 20 in the rack, the monitoring unit 10 collects the rectifier signals and the like from the rectifier 30 through the channel switching module 22, and these rectifier signals generally will enter the channel switching module 22 after passing a regulating circuit (for example, shaping, isolating, buffering, etc.), and are input to the monitoring unit 10 by the channel switching module 22 through the rectifier signal line group.

A method for configuring a rack gating signal is as follows: the minimum number N of the address signals included in the rack gating signal is obtained according to the maximum number M of possible parallel racks, wherein N≥log₂M, for example, when M is 2, the rack gating signal only needs one address signal, i.e., CSA0; when M is 4, two address signals are needed, i.e., /CSA0, /CSA1; when there are 8 parallel racks, the rack gating signal needs three address signals, /CSA0, /CSA1, /CSA2, i.e., the monitoring unit 10 needs to add four signal lines for outputting the rack gating signal, and so forth.

The rack gating module 21 may judge the rack gating signal in various ways including a decoder. In a preferred embodiment, the HUB 20 gates the rack through a comparator 211. Each rack gating module 21 comprises a comparator 211, a board gating address corresponding to the present rack is preset in the comparator 211, and after receiving the rack gating signal, the comparator 211 compares the rack gating signal with the preset board gating address, and outputs a gating success signal if the rack gating signal is consistent with the board gating address corresponding to the present rack, otherwise outputs a gating failure signal. In an embodiment, the comparator 211 outputs a low-level valid board gating signal/CS.

When selecting the rectifier 30 of a certain rack through a rectifier gating signal, the monitoring unit 10 can directly select the rectifier 30 through several address gating signals, but this will cause the number of bus signals to be excessive. For example, when a rack whose power supply capacity is 1500A is configured with 30 rectifiers 30, five address gating signals are needed, and when they are transmitted through differential line pairs, 10 transmission lines are needed, so the cost is high and the reliability is low. In a preferred embodiment, the HUB 20 achieves selection of the rectifier 30 through a counter 23. In the present embodiment, the rectifier gating signal is a cadence signal/CP, and the counter 23, after receiving the cadence signal, generates a rectifier address signal according to the cadence signal and outputs the rectifier address signal to the channel switching module 22, the channel switching module 22 receives the rectifier address signal and selects a corresponding rectifier according to the rack gating signal after decoding, wherein the number of rectifier address signals is determined according to the specific number of the rectifiers 30 included in the rack. In order to select the multiple rectifiers 30 in the present rack in sequence, the value of the counter 23 is increased automatically by 1 once a cadence signal/CP is received so as to facilitate selection of the next rectifier 30. After judging the rack gating signal, the rack gating module 21 outputs a rack gating failure signal if the present rack is not gated, and the rack gating failure signal is output to the counter 23, and the counter 23 is automatically cleared according to the rack gating failure signal to facilitate correct counting of the next time.

The monitoring unit 10 in this embodiment further comprises a switching on/off controlling module 13, and the HUB 20 further comprises an addressing latch 23, which interacts with at least one rectifier 30 in the present rack, the control signal further comprises a switching on/off control signal SW, and correspondingly the control signal line group further comprises a switching on/off control signal line. The switching on/off controlling module 13 is used to output the switching on/off control signal SW, and send the switching on/off control signal SW to the addressing latch 23 through the switching on/off control signal line; the addressing latch 23, after receiving the switching on/off control signal SW, the rack gating signal and the rectifier gating signal, selects a corresponding rectifier 30 according to the rack gating signal and the rectifier gating signal, and then the switching on/off control signal SW is sent to the corresponding rectifier 30 after passing necessary modulate circuits (for example isolated drive). The monitoring unit 10 further comprises a voltage regulation controlling module 14, the HUB 20 further comprises a driver 25, which interacts with at least one rectifier 30, the control signal further comprises a voltage regulation signal PWM, and correspondingly the control signal line group further comprises a voltage regulation signal line. The voltage regulation controlling module 14 is used to output the voltage regulation signal PWM, and send the voltage regulation signal to the driver 25 through the voltage regulation signal line; the driver 25 receives the voltage regulation signal PWM and send it to at least one rectifier 30 of the present rack to perform unified voltage control on it.

The system for monitoring parallel base station power supplies in the embodiment may achieve the input or output of the control signals and rectifier signals with the aid of the measuring and controlling signal interface of the original monitoring unit 10, thus efficiently saving the interfaces and the layout of the original monitoring unit 10. For example, when there are 8 parallel racks and the rack gating signal needs three address signals /CSA0, /CSA1, /CSA2, at this moment, the rectifier signal comprises: an in-position signal EXT, an alarm signal ALM and a current signal CUR, the control signal comprises a voltage regulation signal PWM, a switching on/off control signal SW, and the added cadence signal/CP and gating signals /CSA0, /CSA1, /CSA2, and the original monitoring unit 10 provides measuring and controlling capability for at least 80 signals, but only 9 signal interfaces are utilized in this embodiment, while the remaining 71 signal interfaces can also be used for extension of other functions.

In order to reduce the cost of the HUB 20 for power supply, the monitoring unit 10 of the embodiment can provide power for the HUB 20 remotely. In this embodiment, the control signal further comprises a power supply signal and/or a ground signal, and the control signal line group further comprises a power supply signal line and/or a ground signal line, the monitoring unit 10 further comprises a power supply controlling module, the HUB further comprises a power supply module, the power supply controlling module provides a power supply signal for the working power supply through the power supply signal line, and/or provides a ground signal for the working power supply through the ground signal line. In an embodiment, when the HUB uses a power supply of 5V, the power supply module further comprises a voltage reducing circuit, and the monitoring unit 10 transmits a 12V power supply signal and a ground signal to each HUB 20, then a working power supply of 5V is obtained after passing the dropping circuit.

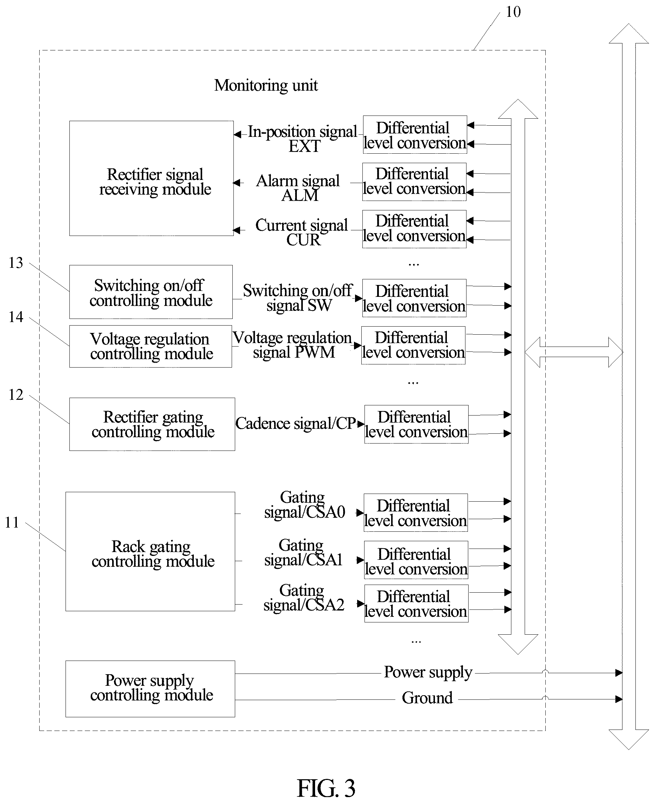

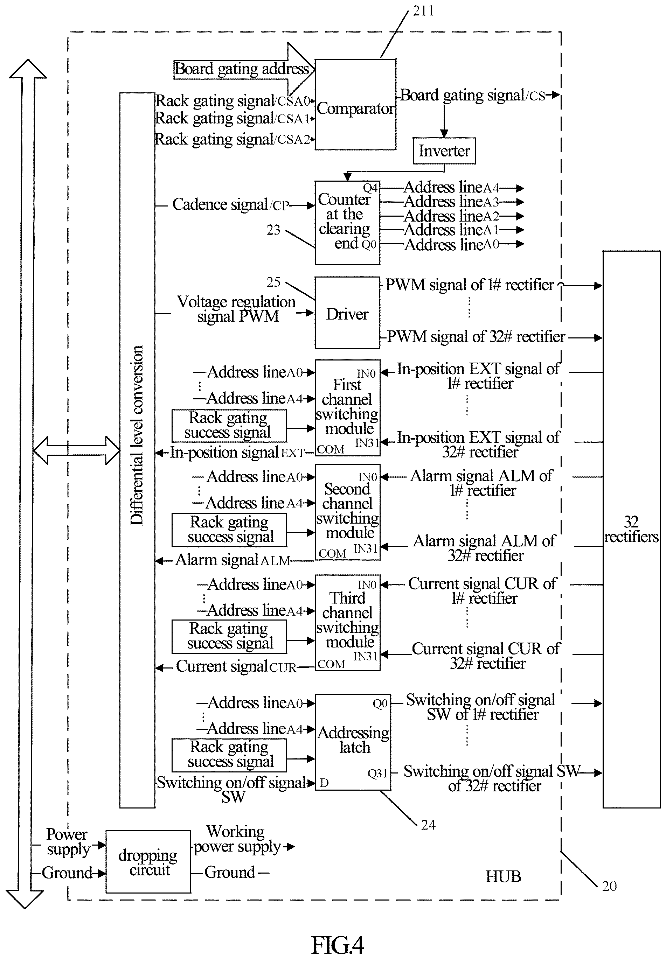

FIG. 3 and FIG. 4 show the configuration of the monitoring unit 10 and the HUB 20 in the system for monitoring parallel base station power supplies in a specific embodiment. If it is supposed that a certain uni-rack base station power supply is a power supply device which is configured with 16 rectifiers 30 of 48V/50A and whose total power supply capacity is 800A, the operator wishes that a uni-rack base station power supply with a capacity of 1500A be provided and 5 parallel racks for power supply be supported, i.e., reaching a total capacity of 1500×5= 7500A, then the existing configuration needs to be modified as follows according to specific requirements.
1) Firstly the rack gating signal is determined, and since the maximum number of extended racks is 5, the minimum number of address signals included in the rack gating signal N≥log₂5, and when N is 3, three address signals /CSA0, /CSA1, /CSA2 are needed. It can be seen that these three address signals actually can support 8 parallel racks, and can support a capacity of 1500A×8= 12000A at most, which exceeds the user's requirement.
2) Next, the hardware circuit of the monitoring unit 10 needs to be modified according to FIG. 3.
   (a) Signal borrowing: this embodiment needs to realize transmission of 9 bus signals including control signals and rectifier signals, namely, the rectifier signal including the in-position signal EXT, alarm signal ALM, current signal CUR, voltage regulation signal PWM and switching on/off control signal SW, and the added cadence signal/CP and gating signals /CSA0, /CSA1, /CSA2, so only 9 out of 96 rectifier measuring and controlling signals in the monitoring unit 10 are directly borrowed, and there are 9 signal lines in total. As shown in FIG. 3, a rectifier signal receiving circuit is used to receive the in-position signal EXT, alarm signal ALM and current signal CUR, the switching on/off controlling module 13 is used to output the switching on/off control signal SW, the voltage regulation controlling module is used to output the voltage regulation signal PWM, the rectifier gating controlling module 12 is used to output the cadence signal/CP, and the rack gating controlling module 11 is used for the gating signals /CSA0, /CSA1, /CSA2.
   (b) Differential level conversion: in this embodiment, 9 differential level conversion circuits are added to the monitoring unit 10 for sending, by way of difference, the control signals and rectifier signals to the bus network composed of a control signal line group and a rectifier signal line group for transmission, and the differential conversion can be implemented by a common RS485 level conversion chip.
   (c) Power supply control: the power supply controlling module also transmits the 12V power supply signal and the ground signal in the monitoring unit 10 to the bus network, and the transmission line and connector can adopt common configurations, for example, a twist-pair and a connector like DB25 are used.
3) Afterwards, a hardware circuit of HUB 20 is designed by referring to FIG. 4, and a HUB 20 is installed on each rack to constitute the topology shown in FIG. 1. The channel switching module 22 in this embodiment comprises three sub-modules, which are used for collecting different rectifier signals in the rectifier 30 respectively. Wherein, the first channel switching module is used to collect the in-position signal EXT from the rectifier 30, the second channel switching module is used to collect the alarm signal ALM from the rectifier 30, and the third channel switching module is used to collect the current signal CUR from the rectifier 30.
   (a) Taking power from the bus network: the HUB 20 obtains a 12V power supply from the bus network, and after the voltage is reduced by a dropping circuit like 7805 chip, a 5V power supply required by the HUB 20 is obtained.
   (b) Differential level conversion: a differential level conversion circuit like MAX485 chip is selected to restore the control signals and rectifier signals to standard Transistor to Transistor Logic (TTL) or Complementary Metal Oxide Semiconductor (CMOS) levels.
   (c) Processing the rack gating signal through the comparator: a board gating address corresponding to the present rack may be preset in the comparator 211 by way of a toggle switch or a jumper, and a comparator 211 like 74HC688 can be selected, and after the rack gating signal is judged, a low-level valid board gating signal/CS valid is output to the three channel switching modules.
   (d) Processing the rectifier gating signal through the counter: in this step, the requirement of 30 rectifiers 30 can be met by constituting a modulo-32 asynchronous counter using a universal logic chip, and of course the modulo-32 counter may be modified by means of resetting a clearing end or setting a control end. After counting the cadence signal/CP, the rectifier address signals are obtained and are then output to the three channel switching modules through address lines A0, A1...A4 respectively. In order to realize accurate counting, an inverter for transmitting the board gating signal/CS may be further added, i.e., the counter is cleared when the board gating signal/CS is invalid.
   (e) Constructing a channel switching module: a multi-channel analog switch (e.g., two CD4067) can be selected for all of the three channel switching modules to achieve detection of 32 rectifier signals, and this circuit design can also ensure that all channel switching is cut off when the board gating signal/CS is invalid.
   (f) Constructing an addressing latch 24: the addressing latch 24 receives the board gating signal/CS and the rectifier address signal, as well as the switching on/off control signal SW from the monitoring unit 10, and selects a corresponding rectifier 30 according to a low-level valid board gating signal/CS and rectifier address signal and sends the switching on/off signal SW to the corresponding rectifier. This circuit design can also ensure that latching is invalid when the board gating signal/CS is invalid.
   (g) Constructing a driver 25: the driver 25 is used to output the PWM voltage regulation signal to all rectifiers 30 in the rack.

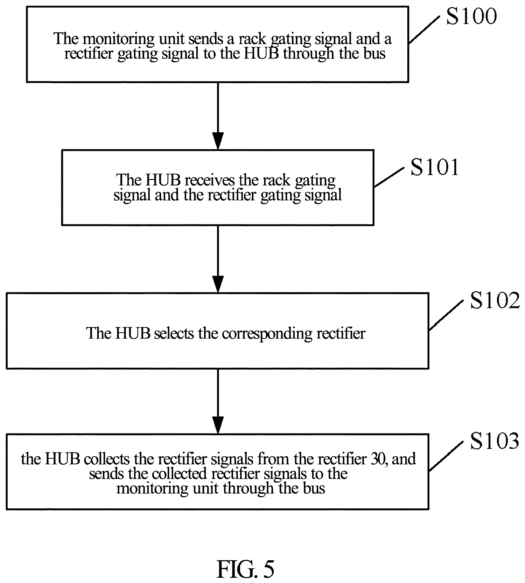

The present invention further seeks protection for a method for monitoring parallel base station power supplies, wherein, each rack comprises a HUB 20 and at least one rectifier 30, control signals and rectifier signals are transmitted respectively through different lines in a bus network composed of a control signal line group and a rectifier signal line group. In the monitoring process, the monitoring unit 10 firstly sends the control signals to the HUB 20 through the control signal line group, the HUB 20 receives the control signals, gates the corresponding rack and rectifier 30 through the control signals, and controls the gated rectifier 30, or collects rectifier signals from the gated rectifier 30 and then sends the rectifier signals to the monitoring unit 10 through the rectifier signal line group. As shown in FIG. 5, the steps of a specific embodiment are as follows.

In step S100, the monitoring unit 10 sends a rack gating signal and a rectifier gating signal to the HUB 20 through the control signal line group. A first rack may be selected firstly, and after the rectifiers 30 contained therein are monitored, the rest of the racks are selected in sequence, or only one rectifier in a certain rack may be monitored as required.

In step S101, the HUB receives the rack gating signal and rectifier gating signal.

In step S102, the HUB selects the corresponding rectifier 30 according to the rack gating signal and rectifier gating signal.

In step S103, the HUB20 collects the rectifier signals from the selected rectifier 30, and sends the collected rectifier signals to the monitoring unit 10 through the rectifier signal line group.

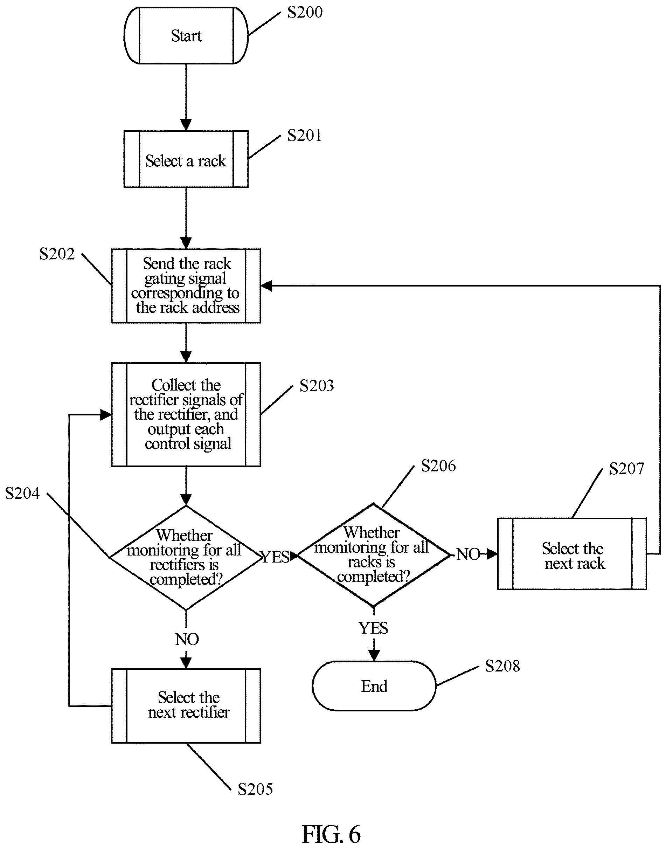

As shown in FIG. 6, in an embodiment, the monitoring unit 10 in a system for monitoring parallel base station power supplies needs to monitor the 5 racks in sequence, and monitors the 30 rectifiers 30 included in each rack in sequence. This kind of embodiment can facilitate the monitoring unit 10 to systematically and thoroughly monitor multiple rectifiers 30 in multiple racks in a certain sequence. The specific monitoring process is as follows.

In step S200, the monitoring procedure starts.

In step S201, the monitoring unit 10 may selects a rack, for example, a rack whose first rack address is 0, or any rack.

In step S202, the monitoring unit 10 outputs in sequence the rack gating signals /CSA0, /CSA1, /CSA2 corresponding to each rack through the rack gating signal line. For example, the first rack address is 0, and the second rack address is 1, and so forth, the last rack address is 4, i.e., the signal levels of /CSA2, /CSA1, /CSA0 corresponding to address 0 are all output as low levels (i.e., binary number "000"), the signal levels of /CSA2, /CSA1, /CSA0 corresponding to address 1 are output as low, low and high levels (i.e., binary number "001"), and so forth.

In step S203, once the last rack is selected, the monitoring unit 10 can start to detect the in-position signal EXT, alarm signal ALM, current signal CUR of the first rectifier 30 in the rack, and outputs the switching on/off control signal SW and voltage regulation signal PWM to the rectifier 30.

In step S204, whether monitoring for all rectifiers 30 in the rack is completed is judged, if so, step S206 is executed, otherwise, step S205 is executed. This step is controlled by the monitoring unit 10.

In step S205, after the monitoring unit 10 sends out a cadence signal/CP through the rectifier gating signal line, i.e., outputting a low-level valid pulse signal, it restores to the default high level, at which moment, the value of the counter 23 is increased automatically by 1 according to the cadence signal/CP, and then it needs to select the next rectifier 30 and return to step S203, until the monitoring unit 10 completes monitoring the 30 rectifiers 30 in the present rack.

In step S206, whether monitoring for all racks in the present system is completed is judged, and if so, step S207 is executed; otherwise, step S208 is executed. This step is controlled by the monitoring unit 10.

In step S207, the monitoring unit 10 selects the next rack and returns to the step S202, i.e., repeating the above steps to monitor all rectifiers 30 in the five racks.

In step S208, the task ends.

Since there are 150 rectifiers 30 in total in the system for monitoring parallel base station power supplies in this embodiment, and the number is relatively large, the user may also detect or control a certain rectifier 30 separately as needed. For example, when the user needs to detect and control the No. 10 rectifier 30 in the fourth rack, the monitoring unit 10 sends out /CSA0, /CSA1, /CSA2 corresponding to the fourth rack address as the rack gating signals, namely, high, high and low levels respectively, and the corresponding address is 0x03; next, the monitoring unit 10 sends out 9 cadence signals/CP in total, after the value of the counter 23 is increased by 9, the channel switching module 22 automatically selects the No. 10 rectifier 30, and the monitoring unit 10 can then collect the in-position signal EXT, alarm signal ALM, current signal CUR and so on in the fourth rack, and meanwhile can send the switching on/off signal SW and voltage regulation signal PWM to the rectifier 30.

The above content is only further detailed description made on the present invention with reference to the specific embodiment, and cannot be construed as limitations to the specific implementation of the present invention. For a person having ordinary skill in the art, several simple deductions or substitutions can be made without departing from the conception of the present invention, and these deductions or substitution shall be regarded as within the protection scope of the present invention.

## Claims

1. A system for monitoring a parallel base station power supply, comprising a monitoring unit (10) and at least one rack, wherein each rack includes a HUB and at least one rectifier (30); the HUB is placed between the monitoring unit and the rectifiers, signal lines of the rectifiers are converged at the HUB, the monitoring unit (10) is used to transmit control signals to the HUB through a control signal line group; wherein the HUB is used to receive the control signals and gate a corresponding rack and rectifier according to the control signals.

2. The system according to claim 1, wherein, the HUB is further used to control the gated rectifier, or collect rectifier signals from the gated rectifier and then send the rectifier signals to the monitoring unit (10) through a rectifier signal line group.

3. The system according to claim 2, wherein, the monitoring unit (10) comprises a rack gating controlling module (11) and a rectifier gating controlling module (12), the HUB is constituted by hardware circuits and comprises a channel switching module (22), the channel switching module (22) interacts with at least one rectifier in a present rack through signal lines, the control signals comprise a rack gating signal and a rectifier gating signal, the control signal line group comprises a rack gating signal line and a rectifier gating signal line; the HUB further comprises a rack gating module (21);
the rack gating controlling module (11) is used to output the rack gating signal and send the rack gating signal to the rack gating module (21) through the rack gating signal line;
the rectifier gating controlling module (12) is used to output the rectifier gating signal and send the rectifier gating signal to the channel switching module (22) through the rectifier gating signal line;
the rack gating module (21) is used to receive the rack gating signal, and judge the rack gating signal, and if the rack is gated, output a rack gating success signal to the channel switching module (22);
the channel switching module is used to receive the rack gating success signal and rectifier gating signal, select a corresponding rectifier according to the rack gating success signal and rectifier gating signal and then collect rectifier signals from the corresponding rectifier and send the rectifier signals to the monitoring unit through the rectifier signal line group.

4. The system according to claim 3, wherein, the rack gating module further comprises a comparator (211), which is preconfigured with a board gating address corresponding to the present rack;
the comparator (211) is used to compare the rack gating signal with the board gating address, and output the rack gating success signal to the channel switching module (22) when the rack gating signal is consistent with the board gating address.

5. The system according to claim 4, wherein, the HUB further comprises a counter (23), and the rectifier gating signal is a cadence signal;
the counter (23) is used to receive the cadence signal, generate a rectifier address signal according to the cadence signal and then output the rectifier address signal to the channel switching module (22);
correspondingly, the channel switching module (22) is further used to select a corresponding rectifier according to the rack gating success signal and the rectifier address signal.

6. The system according to claim 5, wherein, the rack gating module (21), which is used to receive the rack gating signal and judge the rack gating signal, if the rack is not gated, output a rack gating failure signal to the counter (23);
correspondingly, the counter (23) is further automatically cleared according to the rack gating failure signal.

7. The system according to any of claims 3 to 6, wherein, the monitoring unit (10) further comprises a switching on/off controlling module (13), and the HUB further comprises an addressing latch (24), which interacts with at least one rectifier in the present rack, the control signals further comprise a switching on/off control signal, and the control signal line group further comprises a switching on/off control signal line;
the switching on/off controlling module (13) is used to output the switching on/off control signal, and send the switching on/off control signal to the addressing latch (24) through the switching on/off control signal line;
the addressing latch (24) is used to receive the switching on/off control signal, the rack gating signal and the rectifier gating signal, select a corresponding rectifier according to the rack gating signal and the rectifier gating signal and then send the switching on/off control signal to the corresponding rectifier.

8. The system according to any one of claims 1 to 6, wherein, the monitoring unit (10) further comprises a voltage regulation controlling module (14), the HUB further comprises a driver (25), which interacts with at least one rectifier of the present rack, the control signals further comprise a voltage regulation signal, and the control signal line group further comprises a voltage regulation signal line;
the voltage regulation controlling module (14) is used to output the voltage regulation signal, and send the voltage regulation signal to the driver through the voltage regulation signal line;
the driver (25) is used to receive the voltage regulation signal and send the voltage regulation signal to at least one rectifier of the present rack.

9. The system according to any one of claims 1 to 6, wherein, the monitoring unit (10) further comprises a power supply controlling module, the HUB further comprises a power supply module, the control signals further comprise a power supply signal and/or a ground signal, and the control signal line group further comprises a power supply signal line and/or a ground signal line;
the power supply controlling module is used to provide the power supply signal for the power supply module through the power supply signal line, and/or provide the ground signal for the power supply module through the ground signal line.

10. A method for monitoring a parallel base station power supply, wherein a monitoring unit monitors rectifiers in at least one rack, and the method comprises the following steps:
the monitoring unit transmitting control signals to a HUB in the rack through a control signal line group (S100);
the HUB receiving the control signals (S101) and gating a corresponding rack and rectifier according to the control signals (S102); wherein the HUB is placed between the monitoring unit and the rectifiers, signal lines of the rectifiers are converged at the HUB.

11. The method according to claim 10, wherein, the method further comprises: the HUB controlling the gated rectifier, or collecting rectifier signals from the gated rectifier and then sending the rectifier signals to the monitoring unit through a rectifier signal line group (S103).

12. The method according to claim 11, wherein, the control signals comprise a rack gating signal and a rectifier gating signal, the control signal line group comprises a rack gating signal line and a rectifier gating signal line, and correspondingly, the method further comprises:
the monitoring unit sending the rack gating signal to the HUB through the rack gating signal line, and sending the rectifier gating signal to the HUB through the rectifier gating signal line;
after selecting a corresponding rectifier according to the received rack gating signal and rectifier gating signal, the HUB collecting rectifier signals from the corresponding rectifier and sending the rectifier signals to the monitoring unit through the rectifier signal line group.

13. The method according to claim 12, wherein, the step of the HUB selecting a corresponding rectifier according to the received rack gating signal and rectifier gating signal is specifically: the HUB comparing the received rack gating signal with a board gating address preconfigured in the HUB, and selecting the corresponding rectifier according to the rectifier gating signal when the rack gating signal is consistent with the board gating address; and
when the rectifier gating signal is a cadence signal, the step of the HUB selecting a corresponding rectifier according to the received rack gating signal and rectifier gating signal is specifically: the HUB generating a rectifier address signal according to the received cadence signal, and selecting the corresponding rectifier according to the rack gating signal and the rectifier address signal.

14. The method according to any one of claims 12 to 13, wherein, the control signals further comprise a switching on/off control signal, a voltage regulation signal, and a power supply signal and/or a ground signal, and the control signal line group further comprises a switching on/off control signal line, a voltage regulation signal line, and a power supply signal line and/or a ground signal line, and correspondingly, the method further comprises:
the monitoring unit sending the switching on/off control signal to the HUB through the switching on/off control signal line; sending the voltage regulation signal to the HUB through the voltage regulation signal line; and providing the power supply signal for the HUB through the power supply signal line, and/or providing the ground signal for the HUB through the ground signal line; and
after selecting a corresponding rectifier according to the received rack gating signal and rectifier gating signal, the HUB sending the switching on/off control signal to the corresponding rectifier, and sending the voltage regulation signal to at least one rectifier of a present rack.

## Patentansprüche

1. Ein System zur Überwachung einer parallelen Stromversorgung von Basisstationen, beinhaltend eine Überwachungseinheit (10) und mindestens ein Rack, wobei jedes Rack einen HUB und mindestens einen Gleichrichter (30) umfasst; der HUB zwischen der Überwachungseinheit und den Gleichrichtern angeordnet ist, Signalleitungen der Gleichrichter in dem HUB zusammengeführt werden, die Überwachungseinheit (10) dazu verwendet wird, Steuersignale über eine Steuersignalleitungsgruppe an den HUB zu übertragen; wobei der HUB dazu verwendet wird, die Steuersignale zu empfangen und ein entsprechendes Rack und einen entsprechenden Gleichrichter gemäß den Steuersignalen anzusteuern.

2. System gemäß Anspruch 1, wobei der HUB ferner dazu verwendet wird, den angesteuerten Gleichrichter zu steuern, oder Gleichrichtersignale von dem angesteuerten Gleichrichter zu erfassen und dann die Gleichrichtersignale über eine Gleichrichtersignalleitungsgruppe an die Überwachungseinheit (10) zu senden.

3. System gemäß Anspruch 2, wobei die Überwachungseinheit (10) ein Rackansteuerungs-Steuermodul (11) und ein Gleichrichteransteuerungs-Steuermodul (12) beinhaltet, der HUB aus Hardware-Schaltkreisen besteht und ein Kanalumschaltmodul (22) beinhaltet, das Kanalumschaltmodul (22) mit mindestens einem Gleichrichter in einem vorhandenen Rack über Signalleitungen interagiert, die Steuersignale ein Rackansteuerungssignal und ein Gleichrichteransteuerungssignal beinhalten; die Steuersignalleitungsgruppe eine Rackansteuerungssignalleitung und eine Gleichrichteransteuerungssignalleitung beinhaltet; der HUB ferner ein Rackansteuerungsmodul (21) beinhaltet;
das Rackansteuerungs-Steuermodul (11) dazu verwendet wird, das Rackansteuerungssignal auszugeben und das Rackansteuerungssignal über die Rackansteuerungssignalleitung an das Rackansteuerungsmodul (21) zu senden;
das Gleichrichteransteuerungs-Steuermodul (12) dazu verwendet wird, das Gleichrichteransteuerungssignal auszugeben und das Gleichrichteransteuerungssignal über die Gleichrichteransteuerungssignalleitung an das Kanalumschaltmodul (22) zu senden;
das Rackansteuerungsmodul (21) dazu verwendet wird, das Rackansteuerungssignal zu empfangen, und das Rackansteuerungssignal zu beurteilen, und wenn das Rack angesteuert wird, ein Rackansteuerungsgutmeldesignal an das Kanalumschaltmodul (22) auszugeben;
das Kanalumschaltmodul dazu verwendet wird, das Rackansteuerungsgutmeldesignal und das Gleichrichteransteuerungssignal zu empfangen, einen entsprechenden Gleichrichter gemäß dem Rackansteuerungsgutmeldesignal und dem Gleichrichteransteuerungssignal auszuwählen und dann Gleichrichtersignale von dem entsprechenden Gleichrichter zu erfassen und die Gleichrichtersignale über die Gleichrichtersignalleitungsgruppe an die Überwachungseinheit zu senden.

4. System gemäß Anspruch 3, wobei das Rackansteuerungsmodul ferner einen Komparator (211) beinhaltet, der mit einer Boardansteuerungsadresse entsprechend dem vorhandenen Rack vorkonfiguriert ist;
der Komparator (211) dazu verwendet wird, das Rackansteuerungssignal mit der Boardansteuerungsadresse zu vergleichen, und das Rackansteuerungsgutmeldesignal an das Kanalumschaltmodul (22) auszugeben, wenn das Rackansteuerungssignal mit der Boardansteuerungsadresse übereinstimmt.

5. System gemäß Anspruch 4, wobei der HUB ferner einen Zähler (23) beinhaltet, und das Gleichrichteransteuerungssignal ein Kadenzsignal ist;
der Zähler (23) dazu verwendet wird, das Kadenzsignal zu empfangen, ein Gleichrichteradressensignal gemäß dem Kadenzsignal zu erzeugen und dann das Gleichrichteradressensignal an das Kanalumschaltmodul (22) auszugeben; dementsprechend das Kanalumschaltmodul (22) ferner dazu verwendet wird, einen entsprechenden Gleichrichter gemäß dem Rackansteuerungsgutmeldesignal und dem Gleichrichteradressensignal auszuwählen.

6. System gemäß Anspruch 5, wobei das Rackansteuerungsmodul (21), welches dazu verwendet wird, das Rackansteuerungssignal zu empfangen und das Rackansteuerungssignal zu beurteilen, wenn das Rack nicht angesteuert wird, ein Rackansteuerungsfalschmeldesignal an den Zähler (23) ausgibt;
dementsprechend der Zähler (23) ferner gemäß dem Rackansteuerungsfalschmeldesignal automatisch gelöscht wird.

7. System gemäß einem der vorhergehenden Ansprüche 3 bis 6, wobei die Überwachungseinheit (10) ferner ein Ein-Aus-Steuermodul (13) beinhaltet, und der HUB ferner ein Adressierungslatch (24) beinhaltet, das mit mindestens einem Gleichrichter in dem vorhandenen Rack interagiert, die Steuersignale ferner ein Ein-Aus-Steuersignal beinhalten, und die Steuersignalleitungsgruppe ferner eine Ein-Aus-Steuersignalleitung beinhaltet;
das Ein-Aus-Steuermodul (13) dazu verwendet wird, das Ein-Aus-Steuersignal auszugeben, und das Ein-Aus-Steuersignal über die Ein-Aus-Steuersignalleitung an das Adressierungslatch (24) zu senden;
das Adressierungslatch (24) dazu verwendet wird, das Ein-Aus-Steuersignal, das Rackansteuerungssignal und das Gleichrichteransteuerungssignal zu empfangen, einen entsprechenden Gleichrichter gemäß dem Rackansteuerungssignal und dem Gleichrichteransteuerungssignal auszuwählen und dann das Ein-Aus-Steuersignal an den entsprechenden Gleichrichter zu senden.

8. System gemäß einem der vorhergehenden Ansprüche 1 bis 6, wobei die Überwachungseinheit (10) ferner ein Spannungsregelungs-Steuermodul (14) beinhaltet, der HUB ferner einen Treiber (25) beinhaltet, der mit mindestens einem Gleichrichter des vorhandenen Racks interagiert, die Steuersignale ferner ein Spannungsregelungssignal beinhalten, und die Steuersignalleitungsgruppe ferner eine Spannungsregelungssignalleitung beinhaltet;
das Spannungsregelungs-Steuermodul (14) dazu verwendet wird, das Spannungsregelungssignal auszugeben, und das Spannungsregelungssignal über die Spannungsregelungssignalleitung an den Treiber zu senden;
der Treiber (25) dazu verwendet wird, das Spannungsregelungssignal zu empfangen und das Spannungsregelungssignal an mindestens einen Gleichrichter des vorhandenen Racks zu senden.

9. System gemäß einem der vorhergehenden Ansprüche 1 bis 6, wobei die Überwachungseinheit (10) ferner ein Stromversorgungs-Steuermodul beinhaltet, der HUB ferner ein Stromversorgungsmodul beinhaltet, die Steuersignale ferner ein Stromversorgungssignal und/oder ein Massesignal beinhalten, und die Steuersignalleitungsgruppe ferner eine Stromversorgungssignalleitung und/oder eine Massesignalleitung beinhaltet;
das Stromversorgungs-Steuermodul dazu verwendet wird, das Stromversorgungssignal über die Stromversorgungssignalleitung für das Stromversorgungsmodul bereitzustellen, und/oder das Massesignal über die Massesignalleitung für das Stromversorgungsmodul bereitzustellen.

10. Ein Verfahren für die Überwachung einer parallelen Stromversorgung von Basisstationen, wobei eine Überwachungseinheit Gleichrichter in mindestens einem Rack überwacht, und das Verfahren die folgenden Schritte beinhaltet:
Übertragen, durch die Überwachungseinheit, von Steuersignalen über eine Steuersignalleitungsgruppe an einen HUB in dem Rack (S100);
Empfangen, durch den HUB, der Steuersignale (S101) und Ansteuern eines entsprechenden Racks und Gleichrichters gemäß den Steuersignalen (S102); wobei
der HUB zwischen der Überwachungseinheit und den Gleichrichtern angeordnet ist, Signalleitungen der Gleichrichter in dem HUB zusammengeführt werden.

11. Verfahren gemäß Anspruch 10, wobei das Verfahren ferner Folgendes beinhaltet:
Steuern, durch den HUB, des angesteuerten Gleichrichters, oder Erfassen von Gleichrichtersignalen von dem angesteuerten Gleichrichter und dann Senden der Gleichrichtersignale über eine Gleichrichtersignalleitungsgruppe an die Überwachungseinheit (S103).

12. Verfahren gemäß Anspruch 11, wobei die Steuersignale ein Rackansteuerungssignal und ein Gleichrichteransteuerungssignal beinhalten, die Steuersignalleitungsgruppe eine Rackansteuerungssignalleitung und eine Gleichrichteransteuerungssignalleitung beinhaltet, und dementsprechend das Verfahren ferner Folgendes beinhaltet:
Senden, durch die Überwachungseinheit, des Rackansteuerungssignals über die Rackansteuerungssignalleitung an den HUB, und Senden des Gleichrichteransteuerungssignals über die Gleichrichteransteuerungssignalleitung an den HUB;
nach Auswahl eines entsprechenden Gleichrichters gemäß dem empfangenen Rackansteuerungssignal und Gleichrichteransteuerungssignal, Erfassen, durch den HUB, von Gleichrichtersignalen von dem entsprechenden Gleichrichter und Senden der Gleichrichtersignale über die Gleichrichtersignalleitungsgruppe an die Überwachungseinheit.

13. Verfahren gemäß Anspruch 12, wobei der Schritt, in dem der HUB gemäß dem empfangenen Rackansteuerungssignal und Gleichrichteransteuerungssignal einen entsprechenden Gleichrichter auswählt, speziell in Folgendem besteht: Vergleichen, durch den HUB, des empfangenen Rackansteuerungssignals mit einer in dem HUB vorkonfigurierten Boardansteuerungsadresse, und Auswählen des entsprechenden Gleichrichters gemäß dem Gleichrichteransteuerungssignal, wenn das Rackansteuerungssignal mit der Boardansteuerungsadresse übereinstimmt; und wenn das Gleichrichteransteuerungssignal ein Kadenzsignal ist, der Schritt, in dem der HUB gemäß dem empfangenen Rackansteuerungssignal und Gleichrichteransteuerungssignal einen entsprechenden Gleichrichter auswählt, speziell in Folgendem besteht: Erzeugen, durch den HUB, eines Gleichrichteradressensignals gemäß dem empfangenen Kadenzsignal, und Auswählen des entsprechenden Gleichrichters gemäß dem Rackansteuerungssignal und dem Gleichrichteradressensignal.

14. Verfahren gemäß einem der vorhergehenden Ansprüche 12 bis 13, wobei die Steuersignale ferner ein Ein-Aus-Steuersignal, ein Spannungsregelungssignal und ein Stromversorgungssignal und/oder ein Massesignal beinhalten, und die Steuersignalleitungsgruppe ferner eine Ein-Aus-Steuersignalleitung, eine Spannungsregelungssignalleitung und eine Stromversorgungssignalleitung und/oder eine Massesignalleitung beinhaltet, und dementsprechend das Verfahren ferner Folgendes beinhaltet:
Senden, durch die Überwachungseinheit, des Ein-Aus-Steuersignals über die Ein-Aus-Steuersignalleitung an den HUB; Senden des Spannungsregelungssignals über die Spannungsregelungssignalleitung an den HUB; und Bereitstellen des Stromversorgungssignals über die Stromversorgungssignalleitung für den HUB, und/oder Bereitstellen des Massesignals über die Massesignalleitung für den HUB; und
nach Auswahl eines entsprechenden Gleichrichters gemäß dem empfangenen Rackansteuerungssignal und Gleichrichteransteuerungssignal, Senden, durch den HUB, des Ein-Aus-Steuersignals an den entsprechenden Gleichrichter, und Senden des Spannungsregelungssignals an mindestens einen Gleichrichter eines vorhandenen Racks.

## Revendications

1. Un système de surveillance d'une alimentation électrique de station de base parallèle, comprenant une unité de surveillance (10) et au moins un bâti, chaque bâti incluant un concentrateur et au moins un redresseur (30) ; le concentrateur est placé entre l'unité de surveillance et les redresseurs, des lignes de signaux des redresseurs sont amenées à converger au niveau du concentrateur, l'unité de surveillance (10) est utilisée pour transmettre des signaux de commande au concentrateur par le biais d'un groupe de lignes de signaux de commande ; le concentrateur étant utilisé pour recevoir les signaux de commande et portillonner un bâti et un redresseur correspondants selon les signaux de commande.

2. Le système selon la revendication 1, dans lequel le concentrateur est en outre utilisé pour commander le redresseur portillonné, ou collecter des signaux de redresseur à partir du redresseur portillonné et envoyer ensuite les signaux de redresseur à l'unité de surveillance (10) par le biais d'un groupe de lignes de signaux de redresseur.

3. Le système selon la revendication 2, dans lequel l'unité de surveillance (10) comprend un module de commande de portillonnage de bâti (11) et un module de commande de portillonnage de redresseur (12), le concentrateur est constitué de circuits matériels et comprend un module de commutation de canal (22), le module de commutation de canal (22) interagit avec au moins un redresseur dans un présent bâti par le biais de lignes de signaux, les signaux de commande comprennent un signal de portillonnage de bâti et un signal de portillonnage de redresseur, le groupe de lignes de signaux de commande comprend une ligne de signal de portillonnage de bâti et une ligne de signal de portillonnage de redresseur ; le concentrateur comprend en outre un module de portillonnage de bâti (21) ;
le module de commande de portillonnage de bâti (11) est utilisé pour émettre le signal de portillonnage de bâti et envoyer le signal de portillonnage de bâti au module de portillonnage de bâti (21) par le biais de la ligne de signal de portillonnage de bâti ;
le module de commande de portillonnage de redresseur (12) est utilisé pour émettre le signal de portillonnage de redresseur et envoyer le signal de portillonnage de redresseur au module de commutation de canal (22) par le biais de la ligne de signal de portillonnage de redresseur ;
le module de portillonnage de bâti (21) est utilisé pour recevoir le signal de portillonnage de bâti, et évaluer le signal de portillonnage de bâti, et si le bâti est portillonné, émettre un signal de réussite de portillonnage de bâti à destination du module de commutation de canal (22) ;
le module de commutation de canal est utilisé pour recevoir le signal de réussite de portillonnage de bâti et le signal de portillonnage de redresseur, sélectionner un redresseur correspondant selon le signal de réussite de portillonnage de bâti et le signal de portillonnage de redresseur et collecter ensuite des signaux de redresseur à partir du redresseur correspondant et envoyer les signaux de redresseur à l'unité de surveillance par le biais du groupe de lignes de signaux de redresseur.

4. Le système selon la revendication 3, dans lequel le module de portillonnage de bâti comprend en outre un comparateur (211), qui est préconfiguré avec une adresse de portillonnage de carte correspondant au présent bâti ;
le comparateur (211) est utilisé pour comparer le signal de portillonnage de bâti avec l'adresse de portillonnage de carte, et émettre le signal de réussite de portillonnage de bâti à destination du module de commutation de canal (22) lorsque le signal de portillonnage de bâti est conforme à l'adresse de portillonnage de carte.

5. Le système selon la revendication 4, dans lequel le concentrateur comprend en outre un compteur (23), et le signal de portillonnage de redresseur est un signal de cadence ; le compteur (23) est utilisé pour recevoir le signal de cadence, générer un signal d'adresse de redresseur selon le signal de cadence et émettre ensuite le signal d'adresse de redresseur à destination du module de commutation de canal (22) ;
de manière correspondante, le module de commutation de canal (22) est en outre utilisé pour sélectionner un redresseur correspondant selon le signal de réussite de portillonnage de bâti et le signal d'adresse de redresseur.

6. Le système selon la revendication 5, dans lequel le module de portillonnage de bâti (21), qui est utilisé pour recevoir le signal de portillonnage de bâti et évaluer le signal de portillonnage de bâti, si le bâti n'est pas portillonné, émet un signal d'échec de portillonnage de bâti à destination du compteur (23) ;
de manière correspondante, le compteur (23) est en outre automatiquement remis à zéro selon le signal d'échec de portillonnage de bâti.

7. Le système selon n'importe lesquelles des revendications 3 à 6, dans lequel l'unité de surveillance (10) comprend en outre un module de commande de commutation marche/arrêt (13), et le concentrateur comprend en outre un verrou d'adressage (24), qui interagit avec au moins un redresseur dans le présent bâti, les signaux de commande comprennent en outre un signal de commande de commutation marche/arrêt, et le groupe de lignes de signaux de commande comprend en outre une ligne de signal de commande de commutation marche/arrêt ;
le module de commande de commutation marche/arrêt (13) est utilisé pour émettre le signal de commande de commutation marche/arrêt, et envoyer le signal de commande de commutation marche/arrêt au verrou d'adressage (24) par le biais de la ligne de signal de commande de commutation marche/arrêt ;
le verrou d'adressage (24) est utilisé pour recevoir le signal de commande de commutation marche/arrêt, le signal de portillonnage de bâti et le signal de portillonnage de redresseur, sélectionner un redresseur correspondant selon le signal de portillonnage de bâti et le signal de portillonnage de redresseur et envoyer ensuite le signal de commande de commutation marche/arrêt au redresseur correspondant.

8. Le système selon n'importe laquelle des revendications 1 à 6, dans lequel l'unité de surveillance (10) comprend en outre un module de commande de régulation de tension (14), le concentrateur comprend en outre un pilote (25), qui interagit avec au moins un redresseur du présent bâti, les signaux de commande comprennent en outre un signal de régulation de tension, et le groupe de lignes de signaux de commande comprend en outre une ligne de signal de régulation de tension ;
le module de commande de régulation de tension (14) est utilisé pour émettre le signal de régulation de tension, et envoyer le signal de régulation de tension au pilote par le biais de la ligne de signal de régulation de tension ;
le pilote (25) est utilisé pour recevoir le signal de régulation de tension et envoyer le signal de régulation de tension à au moins un redresseur du présent bâti.

9. Le système selon n'importe laquelle des revendications 1 à 6, dans lequel l'unité de surveillance (10) comprend en outre un module de commande d'alimentation électrique, le concentrateur comprend en outre un module d'alimentation électrique, les signaux de commande comprennent en outre un signal d'alimentation électrique et/ou un signal de masse, et le groupe de lignes de signaux de commande comprend en outre une ligne de signal d'alimentation électrique et/ou une ligne de signal de masse ; le module de commande d'alimentation électrique est utilisé afin de fournir le signal d'alimentation électrique pour le module d'alimentation électrique par le biais de la ligne de signal d'alimentation électrique, et/ou fournir le signal de masse pour le module d'alimentation électrique par le biais de la ligne de signal de masse.

10. Un procédé de surveillance d'une alimentation électrique de station de base parallèle, dans lequel une unité de surveillance surveille des redresseurs dans au moins un bâti, et le procédé comprend les étapes suivantes :
l'unité de surveillance transmet des signaux de commande à un concentrateur dans le bâti par le biais d'un groupe de lignes de signaux de commande (S100) ;
le concentrateur reçoit les signaux de commande (S101) et portillonne un bâti et un redresseur correspondants selon les signaux de commande (S102) ; le concentrateur étant placé entre l'unité de surveillance et les redresseurs, des lignes de signaux des redresseurs étant amenées à converger au niveau du concentrateur.

11. Le procédé selon la revendication 10, le procédé comprenant en outre : le fait que le concentrateur commande le redresseur portillonné, ou collecte des signaux de redresseur à partir du redresseur portillonné et envoie ensuite les signaux de redresseur à l'unité de surveillance par le biais d'un groupe de lignes de signaux de redresseur (S103).

12. Le procédé selon la revendication 11, dans lequel les signaux de commande comprennent un signal de portillonnage de bâti et un signal de portillonnage de redresseur, le groupe de lignes de signaux de commande comprend une ligne de signal de portillonnage de bâti et une ligne de signal de portillonnage de redresseur, et de manière correspondante, le procédé comprend en outre :
l'envoi, par l'unité de surveillance du signal de portillonnage de bâti au concentrateur par le biais de la ligne de signal de portillonnage de bâti, et l'envoi du signal de portillonnage de redresseur au concentrateur par le biais de la ligne de signal de portillonnage de redresseur ;
le fait qu'après avoir sélectionné un redresseur correspondant selon le signal de portillonnage de bâti et le signal de portillonnage de redresseur reçus, le concentrateur collecte des signaux de redresseur à partir du redresseur correspondant et envoie les signaux de redresseur à l'unité de surveillance par le biais du groupe de lignes de signaux de redresseur.

13. Le procédé selon la revendication 12, dans lequel l'étape de sélection par le concentrateur d'un redresseur correspondant selon le signal de portillonnage de bâti et le signal de portillonnage de redresseur reçus consiste spécifiquement en : la comparaison par le concentrateur du signal de portillonnage de bâti reçu avec une adresse de portillonnage de carte préconfigurée dans le concentrateur, et la sélection par le concentrateur du redresseur correspondant selon le signal de portillonnage de redresseur lorsque le signal de portillonnage de bâti est conforme à l'adresse de portillonnage de carte ; et
lorsque le signal de portillonnage de redresseur est un signal de cadence, l'étape de sélection par le concentrateur d'un redresseur correspondant selon le signal de portillonnage de bâti et le signal de portillonnage de redresseur reçus consiste spécifiquement en : la génération, par le concentrateur, d'un signal d'adresse de redresseur selon le signal de cadence reçu, et la sélection par le concentrateur du redresseur correspondant selon le signal de portillonnage de bâti et le signal d'adresse de redresseur.

14. Le procédé selon n'importe laquelle des revendications 12 à 13, dans lequel les signaux de commande comprennent en outre un signal de commande de commutation marche/arrêt, un signal de régulation de tension, et un signal d'alimentation électrique et/ou un signal de masse, et le groupe de lignes de signaux de commande comprend en outre une ligne de signal de commande de commutation marche/arrêt, une ligne de signal de régulation de tension, et une ligne de signal d'alimentation électrique et/ou une ligne de signal de masse, et de manière correspondante, le procédé comprend en outre :
l'envoi, par l'unité de surveillance, du signal de commande de commutation marche/arrêt au concentrateur par le biais de la ligne de signal de commande de commutation marche/arrêt ; l'envoi, par l'unité de surveillance, du signal de régulation de tension au concentrateur par le biais de la ligne de signal de régulation de tension ;
et la fourniture du signal d'alimentation électrique pour le concentrateur par le biais de la ligne de signal d'alimentation électrique, et/ou la fourniture du signal de masse pour le concentrateur par le biais de la ligne de signal de masse ; et
après sélection d'un redresseur correspondant selon le signal de portillonnage de bâti et le signal de portillonnage de redresseur reçus, l'envoi, par le concentrateur, du signal de commande de commutation marche/arrêt au redresseur correspondant, et l'envoi du signal de régulation de tension à au moins un redresseur d'un présent bâti.
